# EUROPEAN PATENT SPECIFICATION

(11) **EP 2 909 262 B1**
(45) Date of publication and mention of the grant of the patent: **24.04.2019**
(21) Application number: 13770661.0
(22) Date of filing: 23.09.2013
(51) Int. Cl.: C08L 17/00, C08J 11/18, C08L 95/00, B29C 47/92

(54) **A PROCESS FOR RUBBER MODIFICATION FOR PREPARING A MODIFIED BITUMINOUS PRODUCT, PRODUCT AND PLANT**
PROZESS FÜR KAUTSCHUKMODIFIZIERUNG ZUR HERSTELLUNG EINES MODIFIZIERTEN BITUMENHALTIGEN PRODUKTES, PRODUKT UND ANLAGE
PROCÉDÉ DE MODIFICATION DE CAOUTCHOUC POUR PRÉPARER UN PRODUIT BITUMINEUX MODIFIÉ, PRODUIT ET INSTALLATION

(30) Priority: 21.09.2012 EP 12006626
(43) Date of publication of application: 26.08.2015
(73) Proprietor: RDPower S.r.l., 05100 Terni (TR) (IT); JMD Energy SpA, 05100 Terni (TR) (IT)
(72) Inventor: ARCA, Simone, I-05100 Terni (TR) (IT); D'ALESSANDRO, Emilio, I-65012 Cepagatti (PE) (IT)
(74) Representative: Gislon, Gabriele
(86) International application number: PCT/EP2013/069756
(87) International publication number: WO 2014/044856

(56) References cited:
- EP-A1- 1 038 909
- EP-A2- 0 426 025
- WO-A1-94/14896
- WO-A1-03/051596
- WO-A1-2011/138412
- DE-U1- 29 923 148

## Description

The present invention relates to a process for modification of rubber to prepare a modified bituminous product, to the said product and to a plant for carrying out said process.

In greater detail, the invention refers to: a process to modify vulcanized rubber, in particular crumb rubber from recycled tyres, and to transform it into a product that can be mixed in any amount in bitumen, the product obtainable from said process, a modified Bitumen Product that includes said modified rubber product and a plant for the implementation of said process. The invention also relates to the use of bitumen as an agent to reduce the degree of cross-linking in a cross-linked rubber, especially in rubber obtained from tyres.

The treated crumb rubber obtained according to the present invention can be used in Modified Bituminous Product (MBP) such as waterproofing membranes or similar, paving conglomerates and bituminous compounds. The production of the Modified Bituminous Product, according to the present invention, allows for improvement of the mechanical and physical performances of MBPs, reduction of raw materials use and process energy recovery.

In the present description the following abbreviations will be used: End Life Tire (ELT); Crumb Rubber (CR); Modified Bituminous Product (MBP), Polypropylene (PP), Polyethylene (PE), Ethylene Propylene Diene Monomer rubber (EPDM).

### Background of the Invention

ELTs disposal is an emergent issue in view of the huge amount of tires that need to be disposed of every year, it represents an environmental emergency. In Europe, about 4.5MMt of ELTs were produced in 2010. The tire industry uses 70% of the global natural rubber supply, with the outlook to double the demand in the next 30 years. Shortage affecting natural rubber also affects synthetic rubber production, a fossil fuel dependant product thus not renewable. Natural rubber price evolved from 1.2$/kg in February 2009 to 6.4$/kg in February 2011, corresponding to an increase of 231% by year. ELTs landfilling is banned in EU since the Landfill Directive 1991/31/EC became effective in 2006.

Thus, an efficient technology for recycling ELT is required in order to reduce raw material consumption and avoiding a valuable product wasting. Current recycling technology are mainly focused on recovering the energy content of the ELT, as fuel substitute or in co-incineration, other ELT usage is as inert in paving solutions such as playgrounds, sports fields, paving blocks etc. Current recycling strategies do not take into account the value of the elastomers and other components whereof the ELT are made, that may represent an excellent and inexpensive alternative to virgin elastomers usage in many products.

Recently, reclaiming processes such as devulcanization were proposed for treating CR derived from ELT, i.e. the ground rubber obtained from tyres after separation of at least the metal wires present in the original tyre, in order to obtain a virgin rubber substitute for new tires production. Unfortunately, the high quality requirement for rubber used in tires production does not match with the low grade of the obtained devulcanized product that can be used in new tire production only in an amount of 10-15%, thus poorly affecting the virgin rubber demand. It was also proposed recycling ELT derived CR in the production of modified bitumen products such as waterproofing membranes, paving membranes, paving conglomerates, bituminous compounds. These and similar products are hereinafter generally and not limiting referred to as Modified Bituminous Products (MBPs). Normally CR derived from ELT, as it is, even when finely grounded, cannot be used as filler or polymer substitute in the production of MBP. Viscosity and agglomeration problems occur even at low blending percentage of CR in the other product. The present invention relates to a method for treating ELT derived CR in order to make it compatible with bitumen even at high mixing ratio such as 50% by weigh or more.

The use of ELT derived CR in road paving is known in practice as method for recycling ELT in bituminous compounds. More in detail a CR of a specific grain size replaces the same grain size of mineral filler in bituminous conglomerates. It results in an improvement on paving durability, resistance and elasticity. Problems related to laying temperature make this technology more complex than classical mineral filled conglomerates. CR needs to be "digested" in bitumen at temperature ranging form 190°C to 210°C in order to obtain the required softening, swelling and surface devulcanization thus making the rubber grains compatible with the bituminous media. With this method it is possible to obtain a product called "Asphalt Rubber Binder", with a percentage of CR into bitumen around the 15% by weight, as better defined in ASTM D6114.

Normally a several kinds of additive, mainly devulcanizing agents, or hydrocarbon oils, are used in order to enhance softening, swelling and surface devulcanization of CR.

The use of recycled Crumb Rubber is common in the MBP production as a mean to improve the compound viscosity, but is used only at low percentage, normally lower than 5% to avoid that its presence as filler could affect mechanical properties, such as thermal stability or cold flexibility. Moreover the Crumb rubber needs to be very finely grounded in order to make the blending possible.

WO1994014896 describes a method according to the preamble of claim 1, for stabilizing a CR dispersion into bitumen by mixing ELT derived CR with an hydrocarbon oil in the ratio ranging from 25% to 80% by weight and keeping the blend at a temperature ranging from 100°C to 300°C under continuous mixing for a time ranging from 15 minutes to 8 hours or more. Such treated CR is then dispersed in bitumen and the above said procedure is said to be useful for stabilizing dispersion avoiding rubber particles settling. The presence of hydrocarbon oils is said to be critical for the claimed process; it is disclosed the possibility to carry out the process in a bitumen/hydrocarbon oil mixture or in a bitumen containing a sufficient amount of hydrocarbon oils to perform the above described process. One of the drawbacks of this method is that hydrocarbon oil must be present, at least in an amount of 5% by weight, but generally more. This oil is not a reagent and remains in the final product, so that it exudates from, i.e. it comes to the surface of, the product e.g. membranes or asphalt mixture for paving roads. This is detrimental to the use of the product.

WO2011/138412 discloses a process for de-vulcanizing rubber to produce rubber-modified bitumen. In this process the rubber particles are mixed with dialkyl polysulfides and naphthenic oil or low viscosity bitumen, heated and mixed under mechanical stress.

This process requires the presence of said polysulfides as devulcanizing agent, the presence of a high amount of oil in the bitumen and an amount of 90% by weight of bitumen (or oil) for 10% by weight of a mixture of rubber particles and polysulfides. The resulting product is very fluid and full of oil.

WO2004094513 describes a method for devulcanization of ELT derived CR by treating the same with water under its sub-critical condition, namely under a temperature not grater than the critical temperature and a pressure at lest equal to the saturated vapor pressure at this temperature. The treatment is carried out at a temperature ranging from 260 to 370 °C, and for a time ranging from 1 to 5 hours, in which 20g-30g of ELT derived CR is treated with 100g of water. The patent claims the applicability of the same for CR grain size ranging from 1mm to 4mm. The sulfur removed by devulcanization process is primarily dissolved in the water, the high amount of water used in the process has to be treated before being disposed.

WO2003029298 describes a method for devulcanizing ELT derived CR by treating the same with supercritical carbon dioxide with the possibility to treat CR size ranging from 150 to 5000 microns. The patent describes a process where the said extruder is running at a speed ranging from 25rpm to 50rpm with a feeding rate ranging from 20g/min to 70g/min.

In general the above processes are time consuming, expensive, and result in the presence of undesired products such as oil or water or polysulfides and their by-products that must be removed from the final treated rubber.

Therefore there is the necessity of a process for treating the end-of-life tyres (ELT) in a simple, inexpensive, effective and eco-friendly way, in particular to improve the amount of CR that can be added to paving products and to MBPs.

It is an aim of the present invention to solve the above problem and to provide an efficient method for ELT recycling by producing an MBP obtained using ELT derived CR as modifier through the application of a particular process carried out by means of a particular apparatus. Another aim is to provide an improved process of producing MBPs.

These aims are reached by the present invention that provides a process according to claim 1.

With the wording "pressurized reactor" it is meant a container wherein during the process a pressure is applied to the mixture of bitumen and rubber particles. The pressure can be applied pneumatically, such as it occurs in a closed container upon heating of the mixture, mechanically or in both ways. As discussed hereinafter in greater detail, a preferred pressurized container is an extruder; the mixture in the extruder is subjected to a pressure by the kneading forces of the screw (s) of the extruder, i.e. the reaction mixture is subjected to a mechanical stress in the extruder that applies a pressure to the mixture. The reaction mixture is also subjected in at least part of the extruder to a pneumatic pressure because the heating of the mixture in the barrel of the extruder generates vapors that cannot escape the extruder in view of the viscosity of the heated mixture.

As mentioned, it is a characterizing feature of the invention that the amount of bitumen in the mixture that is treated in the process is less than 50% by weight of the amount of bitumen + rubber particles.

According to the present invention the reaction mixture is free, or substantially free from devulcanizing agents different from bitumen or bitumen/water, namely no dialkyl polysulfides are present in the starting mixture of rubber particles and bitumen. The resulting product is a viscous material that derives from de-vulcanization (reduction of the degree of cross-linking of the polymer) and partial de-polymerization of the starting Crumb Rubber particles. The product resulting from the reaction, hereinafter referred to as a Modified Crumb Rubber, can be substantially free from the starting CR particles and can be dissolved in bitumen to provide a Modified Bitumen Product (MBP) that has an homogeneous composition. According to the invention, the degree of depolymerization and/or de-vulcanization can be controlled to retain part of the original structure of the crumb rubber; in any case the final product is homogeneous and substantially free of unreacted particles. By means of the present invention, a Modified CR is quickly produced by a one-step process, applying heat, pressure and mechanical mixing to a mixture of bitumen and CR (and possibly additives), wherein the amount of rubber particles by weight is greater than the amount of bitumen by weight.

The resulting Modified CR is fully compatible with MBPs. The process is carried out by means of devices capable to pump and mix CR and bitumen under heating and pressure conditions and possibly add chemical agents, such as water, in various states such as liquid, solid, gas and solutions during mixing. Exemplary devices are extruders and twin screw extruders both co- and counter-rotating. The present invention also relates to a plant for MBPs production, that comprises a pressurized reactor for carrying out the above disclosed process.

The present invention is innovative and advantageous in various aspects:
1) The method exploits the effect of the bitumen as modifying agent for CR, in order to obtain a proper desired grade of swelling, softening, devulcanization, and depolymerization that transforms the initial CR grain into a product fully compatible with MBP.
2) The method further exploits the lubricating effect of the bitumen that helps to carry out the process in continuous, by means of suitable devices like extruders.
3) The process and the apparatus for carrying out the same, allow for their optimal integration with a classical MBP facility and this allows for the recovery of the heat required for the CR transformation process into heat useful for MBP production.
4) The method allows for the use, and thus recycling, of remarkable amounts of tyres in the form of ELT-derived CR either as modifiers and/or bitumen substitute, depending on the desired CR loading in the final MBP and depending on the desired mechanical properties of the final MBP.

The present invention is based on the not previously known evidence, obtained by a series of laboratory experiments, that the action of bitumen, in a proper ratio of Bitumen/CR, under the claimed conditions of temperature, pressure, and under mechanical mixing, modify CR making the same fully compatible, in any amount, with bitumen, resulting in a product particularly useful for MBPs production.

According to the invention, the Crumb Rubber is mixed with bitumen in a proper ratio and heated to a claimed temperature, preferably within the range from 250°C to 370°C, under a pressure that is equal to or greater than the saturated vapor pressure of the reaction mixture in the reactor, at the temperature at which the reaction takes place. Preferred temperature ranges are 280°C to 350°C and most preferably 300°C to 340°C.

The amount of bitumen required in the process is less than 50% and can be as low as 5% by weight of the total amount of bitumen and crumb rubber. The amount is preferably 40% by weight or less, generally it is in the range of 10% to 40%, preferably 10% to 30% by weight with respect to the total amount of bitumen and crumb rubber.

Suitable bitumen for use in the invention is any grade of distilled bitumen or any grade of oxidized bitumen or mixtures of the both depending on the desired hardness grade. In general suitable bitumens of this types have an hydrocarbon oil content of less than 5% by weight, preferably less than 3% by weight most preferably the hydrocarbon oil content has to be as little as possible in order to avoid any exudation problem on the final MBP. Suitable pressure for the process of the invention are generated by heating the reaction mixture in the closed reactor. An exemplary pressure is in the range of 5 to 12 bar, and is in any case at least equal to the saturated vapor pressure of the reaction mixture at the reaction temperature.

Suitable crumb or particles of rubber for use in the present invention is the rubber crumb deriving from grinding tyres or other any kind of waste CR resulting from processes that use elastomers or elastomers in their vulcanized or crosslinked form. Dimensions of the rubber particles are within the range of 0.1mm to 5.0 mm, preferably 0.5 mm to 5.0mm, and most preferably 0.5 mm to 2.0 mm. The crumb rubber can contain fibers particles, either synthetic or natural. It is an advantage of the invention that the presence of textile fibers is not a problem for the invention; any fibers deriving from the tyres shredding and grinding process will be incorporated into the final fluid product without sedimentation. As a matter of fact the presence of fibers can be useful when the final MBP is a waterproofing bitumen membrane or layer.

Suitable reactors are those that can impart a pressure to the mixture under mixing. An extruder is considered as a suitable reactor, also in view of the fact that the viscosity of the mixture provides a sealing effect within the extruder barrel.

It was surprisingly found that under these conditions the bitumen per se, even without hydrocarbon oils and in any case with a content of hydrocarbon oils of less than 5%, preferably less than 3%, by weight of the bitumen, shows a remarkable effectiveness on the processes of swelling, softening, depolymerization and devulcanization involved in the CR compatibilization, transforming the CR in a manner that makes the same fully compatible for MBP production.

The above described bitumen and ground vulcanized rubber (CR) are not meant to be limiting, any other bitumen or vulcanized or cross-linked rubber, that results apparent to one skilled in the art and that is suitable for the herein described process can be included in the present invention.

MBPs product represents a reliable strategy for a wide scale ELT recycling because the quality requirements for elastomers used in MBPs production are much less restrictive than that for tire production.

The invention is further disclosed with reference to the following non-limiting examples:
Figure 1 is a flow chart of the process according to a first embodiment;
Figure 2 is a flow chart of the process according to a second embodiment;
Figure 3 is a layout of a preferred plant for carrying out the CR modification process integrated in a classical MBP facility;
Figure 4 is a schematic view of the device used for laboratory test of the modification process and for pressure measurement;
Figure 5 is a schematic view of the apparatus used for carrying out the rubber modification process in a continuous manner;
Figure 6a is a chart that compares the Ring and Ball test performances of an MBP produced according to the present invention and an MBP produced according to the prior art;
Figure 6b is a chart that compares the Brookfield Viscosity test performances of an MBP produced according to the present invention and an MBP produced according to the prior art.

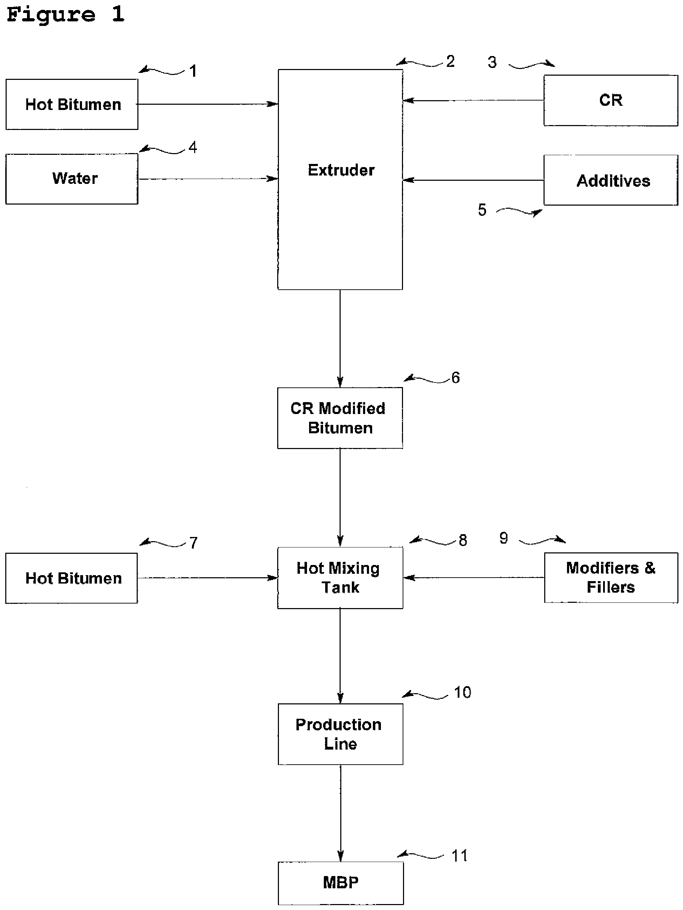

With reference to the preferred embodiment of the process shown in Fig 1, the particles of Crumb Rubber are dosed from CR tank 3 into extruder 2 in a known way, e.g. by means of a loading hopper. The main CR modification process takes place inside the extruder 2. The extruder is provided with injection devices 1 for the injection of bitumen. The extruder is also provided with injection means 5 used to inject into the barrel a proper amount of additives useful for helping one or more of the steps involved in the whole compatibilization process like swelling, softening, depolymerization and devulcanization. Such additives can be the additives known in the art for playing a role in CR modification, like water or water containing dissolved, suspended or emulsified additives or other additives in their liquid or gaseous form. If required, additives in their solid form of powders, flakes, granules or slurries, can be directly added and dosed either in the CR tank 3 or directly in the extruder loading hopper.

Solid additives can be, for examples, chemical agents, like metal oxides, that play the role to capture, reduce or oxidize the sulfur during the devulcanization process, thus avoiding or limiting re-crosslinking. Additives useful to enhance swelling, softening or depolymerization can be also added. Moreover also additives for improving extrusion performances can be added, such as plastomeric polymers like PE, PP, and/or elastomeric polymers like virgin rubber both natural and synthetic. Such additives also play the role of performances enhancers in the final MBP. The bitumen can be also useful as a carrier for adding additives that are soluble in hydrocarbons. The bitumen-CR mixture is treated inside the extruder resulting in a Modified CR, 6, useful for MBP production. In the embodiment of fig.1, the modified CR is then directly forwarded to a classical MBP production facility that comprises in a known way hot mixing tanks 8 means 7 for further bitumen addition and means 9 for addition of further modifiers and fillers. The blend thereby produced is destined to the production line 10 where the final MBP product 11 is finalized.

More in detail, according to the present invention all the chemical and physical reactions involved in the CR transformation process take place into the extruder 2, that is heated at a temperature above 200°C, preferably ranging from 250°C to 370°C, more preferably in the range of 300°C to 340°C. The extruder allows for mixing and keeping reaction pressure by the formation of a melted plug that avoids any fluid backflow along the screw. It is known in the art that CR, and in particular ELT derived CR, even when finely grounded, cannot be directly extruded because the screw would be clogged and blocked due to the thermosetting and elastic nature of CR. According to the present invention this problem is solved, in fact the injection of bitumen plays the role of lubricant along the screw and allows for a rapid swelling and softening of the grains and their partial surface devulcanization allows the formation of the desired melted plug along the screw, that seals the space between barrel and screw, making possible pressure retention during extrusion.

For this reason injection of any component is performed in preferred positions along the barrel in order to obtain the extrudability of the blend and ensure the quality of the Modified CR. The compatibilization reaction takes place at the above said temperature and also under a certain pressure in order to avoid bitumen light fraction loosing. The reaction pressure has to be the minimal reaction pressure in order to avoid bitumen light fraction loosing and also to avoid gaseous fluid sacs formation that makes extrusion process unstable.

Example 1 demonstrates how the described process can work only in a closed reactor, thus under a certain pressure in order to avoid that the light fraction of the bitumen creates pollution problems. The pressure generated by the bitumen saturated vapor can be taken as minimal required pressure for the process, anyway any pressure suitable to provide stable process and extrusion is desirable, within the limits of the safety for apparatus and operators. The mechanical mixing of the mixture inside the extruder improves process efficiency reducing remarkably treatment time and allowing for a better homogenization of the same.

Example 2 reports how the stirring reduce remarkably treatment time. The process allows for the use of a minimal amount of bitumen, thus remarkably reducing the energy demand. The amount of bitumen required is in the range of 5-50%, preferably 5-40%, more preferably 10% to 30% by weight, depending on the desired effect, wherein the percent of bitumen is calculated as bitumen/bitumen + CR, by weight.

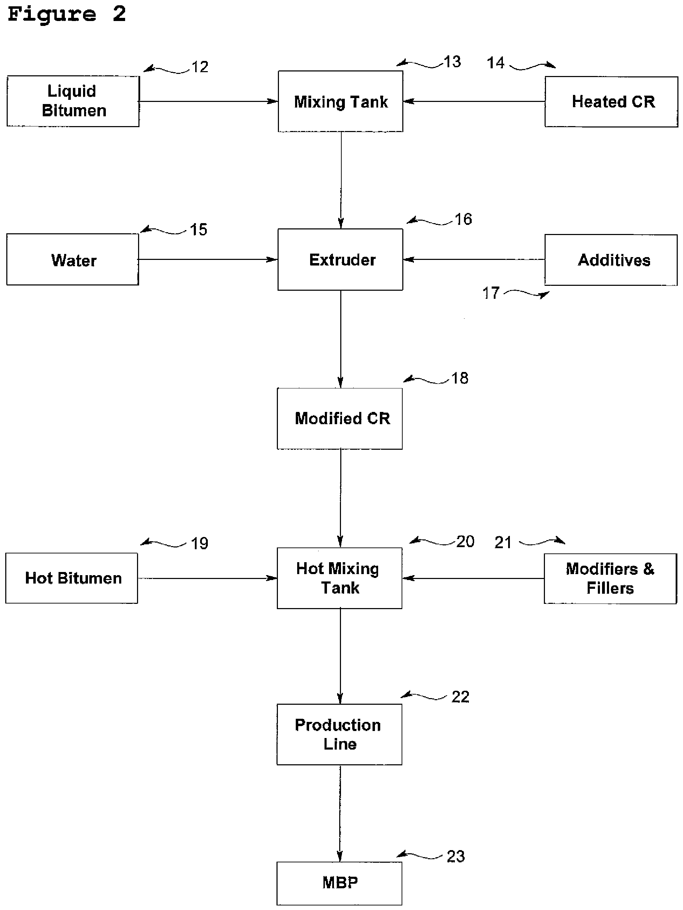

Another exemplary embodiment of a plant according to the invention, outlined in Figure 2, is characterized in that the bitumen is not directly injected into the extruder barrel but a pre-mix is previously prepared. The bitumen and CR are separately heated in heating containers 12, 14 respectively; the liquid bitumen and the heated CR are then dosed and mixed in a mixing tank 13 in the desired bitumen/CR ratio. The mixing tank 13 is provided with devices for keeping temperature constant and for mixing bitumen and CR together. The bitumen-CR mixture is then transferred to the extruder 16 where the main modification process takes place.

The extruder 16 is also provided with injection means 15 used to inject into the barrel an amount of water or water containing dissolved, suspended or emulsified additives. The extruder is also provided with further injection devices 17 used to inject into the barrel additives in their liquid or gaseous form. If required, additives in the form of powders, flakes, granules or slurries, can be directly added and dosed either in the heated CR tank 14 or the mixing tank 13 or directly in the extruder loading hopper.

The pre-mix is treated inside the extruder resulting in a Modified CR product 18 useful for MBP production. Such Modified CR is then addressed to the classical MBP production facility characterized by the hot mixing tanks 20, devices 19 for further bitumen addition and devices 21 for further modifiers and fillers addition. The blend thereby produced is destined to the production line 22 where the final BMP product 23 is finalized.

More in details the method relates to a first step where a pre-mix composition blend is prepared by mixing bitumen and CR together. Referring to Figure 2 the bitumen is stored in tank 12 at a temperature comprised between its melting point and 180°C. The tank 12 can be the bitumen storage tank normally used in a MBPs facility. The CR is stored in the tank 14, where it can be preheated at a temperature ranging from 80°C and 180°C more preferably in the range between 130°C and 150°C, if required.

Hot bitumen and heated CR are transferred in any known way to mixing tank 13, that is provided with means for heating and mixing the blend, in order to obtain the required pre-mix composition. The ratio between bitumen and CR, and the preparation of the mixture in tank 13 are very important.

The bitumen/CR ratio preferably is the minimum required for obtaining the desired results that is just the wetting of the CR grain resulting in a CR grain covered by a thin film of bitumen not sufficient to make the grains stick together at room temperature. The final result is preferably a CR mixed with bitumen that preserve its state of dry powder at room temperature. Therefore the CR/bitumen ratio is strictly related to the grain specific surface and thus grain size.

Example 3 reports how for a grain size distribution of 0.5mm - 2mm the optimal weight ratio by weight is 70% CR and 30% bitumen, while for a grain size distribution of 2mm - 4mm the optimal weight ratio is 80% CR 20% bitumen. Preferably, preparation of the pre-mix is performed at a temperature low enough and for a time short enough to avoid surface reaction between the CR grain and bitumen and thus avoid grains sintering. Any reaction between grains and bitumen should occur subsequently, within extruder 16. The preferred temperature for preparing the pre-mix composition is in the range of 80°C to 160°C more preferably 130°C to 150°C. The preferred time for obtaining the pre-mix composition is 2 minutes to 15 minutes and in any case enough to have an homogeneous wetting of the grains with bitumen, and avoiding any surface reaction between bitumen and CR grain.

At this stage chemical agents, in the solid form of powders, grains, or flakes, can be added as additives to the pre-mix composition in order to help the compatibilization process, by enhancing e.g. swelling, softening, devulcanization, depolymerization, etc.

The resulting pre-mix composition has the desired consistency of a powder and it can be either stored or directly treated.

Once prepared, the pre-mix composition is treated in the extruder 16 directly loading the same into the extruder loading hopper. The powder consistence of the pre-mix composition makes the same easy to dose into the extruder and its homogeneous wetting with bitumen allows for the best mixing between bitumen and CR. Water can be added along the barrel by injection devices 15, water injection can be also useful to introduce into the extruder water soluble additives for swelling, softening, depolymerization and devulcanization. According to this embodiment, i.e. by preparing a pre-mix composition, devices for bitumen dosage and injection along the barrel are no longer necessary.

Referring to both the above described embodiments, a water/bitumen emulsion can be used instead of bitumen only in order to inject both water and bitumen at the same time with the same device. The water/bitumen emulsion can be also useful to inject water soluble and hydrocarbon soluble additives. In the case of the pre-mix composition preparation, the use of a water/bitumen emulsion allows for the preparation of a pre-mix composition that contains all the elements useful for the CR modification, namely CR, bitumen, solid agents and all the required additives that can be dissolved in water or in bitumen. According to this last aspect any injection devices along the extruder barrel can be eliminated resulting in a plant and process simplification where special extruders are not required. Referring to both the embodiments, the use of any kind of the above reported additives is not strictly required. The process can work finely using only CR and bitumen in the right proportion, and properly tuning temperature, pressure and treatment time in the disclosed ranges.

The use of any additive is optional in order to obtain any specific and desired characteristic, for process temperature lowering, for lowering the process pressure or for speeding up the process. Example 4 describes how the above described process are easily carried out by means of a twin screw extruder.

Among the various additives, water is known in the art for acting as an actual devulcanizing agent according to the following main reactions A) and B).

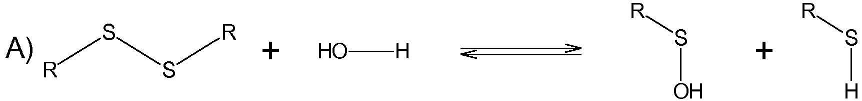

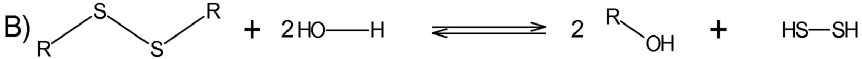

Water also acts by removing sulfur from the reaction media thus promoting devulcanization process. For this reason water also acts as deodorizing agent capturing water soluble elements resulting from the process such as sulfur based compounds, that are known to smell bad. Water may also protect bitumen and other potentially thermally degradable compounds presents in CR from thermal decomposition and oxidation. According to an exemplary embodiment of the present invention, if water is present, the amount of water useful as agent is in the range 0.1% to 30% by weight on the total weight of the reaction mixture, preferably from 2% to 20% depending on the desired effect.

By working the process under a pressure, as per the present invention, the water can be kept in its liquid state during the same. According to the present invention, water results effective in bad odor elimination both when added during process and when applied as post treatment. When water is applied as a post treatment a better result in bad odor elimination is obtained adding water just at the end of the process while the Modified CR is still fluid allowing for a better contact whit water. According to the present invention a minimal amount of water is required, resulting in energy costs saving and reduction of wastewater potential production. The water resulting from the treatment is then eliminated from the reaction media by evaporation, e.g. because the following entire production line operates at a minimum temperature of 180°C.

The above described process differs from the process disclosed in WO1994/014896 or WO2011/138412 in several aspects. The main difference is that in the present invention the amount (by weight) of bitumen in the reaction mixture is less than the amount (by weight) of rubber to be treated (namely less than 50% by weight of the total amount of bitumen + rubber), while in WO19947014896 and in WO2011/138412 the amount of hydrocarbon oil, bitumen rich in oils, or a mixture of both, is much greater than the amount of rubber. This derives from the fact that in the prior art bitumen, rich in oils, was conceived and used as a bulk solvent or media where the devulcanization takes place; for this reason in the description of WO'896 much attention is given to problems deriving from the CR settling into the bitumen or hydrocarbon oil.

On the contrary, in the present invention the bitumen is used as an additive or as a modifier in the minimum amount required. This also results in energy saving when heating, at temperatures higher than normal MBP production temperatures, a reduced amount of material. Moreover, according to the present invention, the CR modification occurs quickly, generally in a time of few minutes, normally less than 15 minutes, and anyway for a time short enough to make possible to carry out the process in continuous by means of an extruder.

Example 5 is a comparative example that demonstrates how the procedure described in WO1994014896 cannot be performed when the CR/bitumen ratios are the ratios reported in the present invention (see e.g. claim 3). A further aspect is that, according to the present invention, the use of hydrocarbon oils can be completely avoided, this is a further advantage because the addiction of oils represent a problem in MBPs production due to oils exudation in the final product.

Still another difference is that the present process works in a closed reactor, thus under a pressure, generated by bitumen light fraction vapors, water or vapors of other additives.

The above described process also differs from WO2004094513 for various aspects. The first aspect is that the process is not aimed to rubber devulcanization but to CR compatibilization into bitumen for MBP production, this results in less strict quality requirements and thus in an easier process to carry out. The second aspect is that the process exploits the action of bitumen, and being the final product a bituminous product, the use of the same bitumen also as CR modifying agent does not pose a problem in the final product. A further aspect is that the use of water, if any, is limited to the minimal amount required to help the above described compatibilizing process, and not as a bulk solvent or media where the devulcanization takes place. This results in energy cost saving and in a remarkable environmental impact reduction, by a drastic reduction of wastewater production.

The present invention also relates to a preferred plant to carry out the above described process according to claim . The process has to take place under pressure, mixing and high temperature condition, thus the use of an extruder results in an easy way to carry out the process in continuous. The extruder plays the multiple role of:
1) Pumping continuously the blend into the plant against the pressure required for the process.
2) Acting as a plug flow reactor and allowing for a fine process temperature control.
3) Providing the desired mixing to the reacting media by proper screws design.
4) Allowing for a fine process pressure control by regulating the discharging orifice and screws speed. Moreover, the use of an extruder, reducing at the minimum the amount of air present during treatment, allows for the maximum reduction of the oxygen during treatment, preventing bitumen and CR oxidation at high temperature.

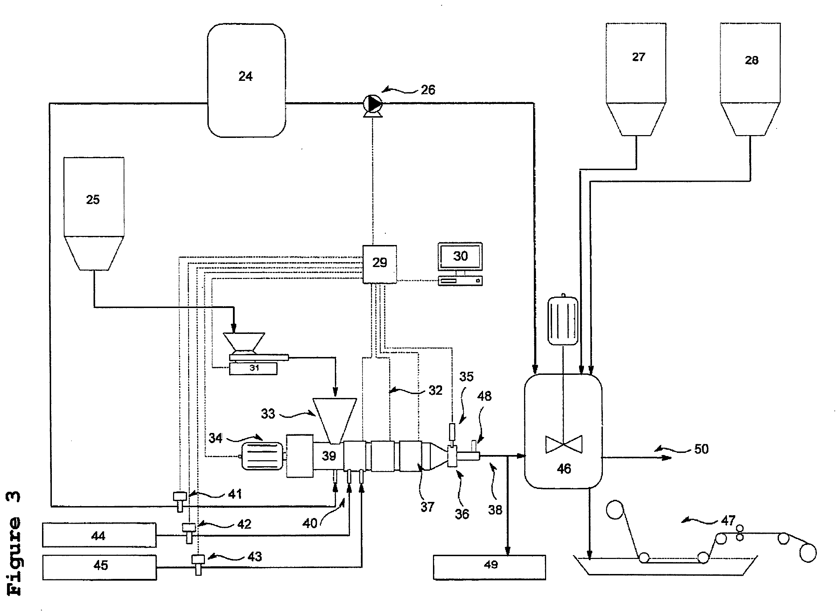

Referring to the schematic disclosure of Figure 3, the extruder 39 can be a common single screw extruder, more preferably a twin-screw extruder, or a co-rotating or a counter-rotating extruder. The extruder is provided with heating systems 37 in order to keep the process temperature at the desired values, such systems can be either electrical heaters 37 or heat transfer fluids in a proper hydraulic system. The heating system is preferably divided in various heating zones in order to obtain temperature gradients along the barrel if required.

Along the extruder barrel are installed injection ports 40 that allow for injection of at least one of the following substances: water from water source 44, bitumen from storage tank 24 and additives from container 45, where required, by means of proper injection systems 41,42,43. The extruder head has a calibrated orifice 36, as extruder's outlet, that offers an exact pressure loss and thus allows to keep the extruder internal pressure. The extruder head is provided with a pressure transducer 35 that allows for process pressure detection.

The extruder is supplied with rubber particles (CR) by dispenser 31 that receives the CR from CR storage tank 25. The dispenser 31 doses the CR into the extruder loading hopper 33, that can be provided by heating or cooling media in order to ease the extruder loading avoiding CR clogging. The CR is treated inside extruder 39 where it is mixed with bitumen. The bitumen comes from the bitumen storage tank 24 that can be directly the bitumen storage tank in use in the MBP facility. The CR and bitumen and potentially various additives are treated inside the extruder 39 resulting in a Modified CR that leaves the extruder at a temperature ranging from 250°C to 370°C. This Modified CR can be addressed to the mixer 46 for further processing, otherwise addressed to the section 49 where is cooled an packed in order to be distributed as a CR masterbatch.

The extruder head may be provided with a venting port 48 that can result useful for venting, before discharging, potential vapors or gases released during the process. Particularly such venting port can be useful for discharging vapors or gases containing smelling agents released during process, such as sulfur compounds, that may result in bad odors in the final product, these vapors can be then separately treated in an proper manner, such as in a post combustor device.

The temperature at which the Modified CR leaves the extruder is quite higher than the known temperature used in MBP production factory, that works normally at 180°C. This means that the above described compatibilization process is more energy demanding than the normal MBP production process.

According to the present invention this problem is solved in two manners: firstly with a proper process conceiving that reduces to the minimum the amount of bitumen used in the high temperature compatibilization process, secondly with a proper plant integration where the Modified CR, that results from the extruder at a temperature ranging from 250°C to 370°C, is directly transferred into the mixer 46 where it is mixed with further bitumen at a lower temperature and with further modifiers and fillers at room temperature.

This blending process is normally an energy demanding process for the heating of the bitumen, modifiers and fillers at the desired production temperature. With the proper plant integration described in the present invention, the extra enthalpy contained in the modified CR resulting from the extruder is fully recovered by its direct mixing with further cold components, resulting in an overall reduction of the energy demand in the mixer. The MBP produced in the mixer is than fed to the normal production line 47 for the finalization of the product, where the MBP is a waterproofing membrane, otherwise it can be addressed to different production lines 50 for different MBPs production.

The overall process is controlled by the Programmable Logic Controller (PLC) 29 that receives the pressure signal from the pressure transducer 35 and regulates the speed of the extruder motor 34 in order to keep the barrel internal pressure constant. The PLC also receives the temperature signals 32 and regulates the power supply to the heaters in order to keep constant the desired barrel temperature. The PLC controls the dispenser 31 in order to establish the exact CR feeding rate in the extruder hopper 33. The PLC also control the bitumen pumps 26 and 41 in order to establish the exact amount of bitumen that has to be injected inside the extruder 39, according to a desired CR/bitumen ratio, and the remaining amount that has to be subsequently added in the mixer 46.

The PLC also controls the pumps 42 for water 44 injection and dosage, where required, and the pump 43 for further additives 45 injection and dosage, where required. The PLC 29 can be monitored by a PC 30 that allows for process parameters logging and displaying.

The screw should have a feeding section capable of receiving CR of various grain sizes ranging from 0.5mm to 5mm, a short transition section for transferring the CR to the next section, possibly a venting section where the screw pitch increase in order to speed up the material transition, a compression section where the screw pitch remarkably decreases in order to improve pumping action and increase pressure, a kneading block section where the screw is interrupted and where the grains are mechanically masticated in order to enhance the compatibilization, and a final metering section for pumping the treated product against the extruder head. The above described plant is a continuous plant for Modified CR production, other plants conceived for carrying out the process in continuous, semi-continuous or batch manner are also within the scope of the present invention.

Example 4 describes how the above described plant, that uses the extruder as a plug flow reactor for a process carried out in a continuous fashion is effective in the production of the Modified CR.

A further advantage of the present invention is the applicability of the process to any grade of CR. In particular, for ELT derived CR, the grains result often polluted by remarkable amounts of fibers resulting from cutting the casing ply during the shredding of the tyre. The longer fibers are separated from the CR during the shredding process but tiny fibers remain mixed in the CR particularly in the smaller grain sizes. This results in a bad quality of the CR that in prior art processes requires further separation and purification process to avoid the presence of the fiber particles. According to the present invention this problem is avoided by the above described process where the temperature, greater than 250°C, melts any synthetic fibers in the Modified CR resulting in a homogeneous product. In case a fraction of such tiny fibers is a melt resistant materials, such as cotton fibers, the use of the extruder allows however for their homogeneous blending into the Modified CR and such thermal resistant fibers may play a reinforcing role inside the final MBP product.

The present invention further relates to a Modified CR product with a desired grade and combination of swelling, softening devulcanization and depolymerization. The modified CR product is useful both as a bitumen substitute and as a substitute of polymeric modifiers. Further in detail, by carrying out the process under lower temperatures or shorter treatment times, or a combination of the both, is possible to obtain a product that preserve most of the elastomeric characteristics of the original CR, thus useful more as modifier than as bitumen substitute. By carrying out the process under higher temperatures or longer treatment times, or their combination, the obtained product is more similar to bitumen and is useful more as a bitumen substitute than as a modifiers substitute. By tuning properly treatment temperature and time is also possible to obtain a bitumen substitute that can avoid further bitumen addiction resulting in a MBP production by the only addiction of further modifiers and fillers.

The present invention also relates to the MBP produced using the Modified CR both as bitumen substitute and elastomer substitute. The Modified CR obtained according to the present invention can be used in MBPs production in a ratio ranging from 1% to 70% by weight or more, preferably within the range from 20% to 60% by weight on the total composition

Example 6 describes the mechanical properties obtained by using the above said product in an elastomeric MBP production. More in detail, the present invention also relates to a MBP containing a remarkable amount of CR compatibilized within. During compatibilization process the carbon black (that is generally present in the CR in a percentage ranging from 20% to 40% by weight) is released and compatibilized inside the MBP matrix, resulting in an addition to the final product of a light filler. Thus the MBP resulting from the use of CR treated according to the present invention is characterized by containing carbon black in a quantity ranging approximately from 0.1% to 40% by weight, depending on the carbon black load in the CR used and the amount of modified CR in the final MBP. The presence of the carbon black inside the MBP product is thus a telltale that the MBP was obtained through the present invention. Carbon Black is detectable by various techniques known to one skilled in the art, a preferable technique is Thermo Gravimetric Analysis (TGA).

The MBP containing the Modified CR produced according to the present invention is also characterized by a better behavior in reaction to fire, as better defined in ENV 1187, EN 13501 and EN 11925 and described in the Example 7, in particular the MBP obtained using the Modified CR shows better performances in fire reaction passing at least the Class E and at least the Class Broof (t2) as defined in the EN 13501.

The MBP containing the Modified CR produced according to the present invention shows the above described better behavior in reaction to fire intrinsically thus without the use of any fire retardant additive, as normally required for a classical MBP product in order to obtain similar fire behavior.

When the CR used according to the present invention for a MBP production is an ELT derived CR, a further benefit is obtained. In fact, normally in the rubber compound used for tire production a significant amount of UV protecting chemical agents are used in order to protect the tire from UV damages. According to the present invention, these UV protecting chemical agents, present in the ELT derived CR, end into the final MBP making the same to be much more UV resistant than a normal MBP. Thus the resulting MBP product is complying the requirements of the EN 1297 for UV resistant Flexible sheets for waterproofing as reported in Example 8.

The invention will now be further discussed with reference to the enclosed non-limiting examples.

### Example 1

21g of CR and 9g of bitumen are homogeneously mixed and loaded in an autoclave, the autoclave is closed and treated at a temperature of 320°C for 2h. The same amount of 21g of CR and 9g of bitumen are homogeneously mixed and loaded in an open reactor and treated at the same temperature for the same time.

The product resulting from the closed autoclave is a quasi-liquefied CR that results fully soluble in bitumen. By contrary the product resulting from the open reactor is a dry product of a quasi carbonized CR that result useless in any kind of MBP.

### Example 2

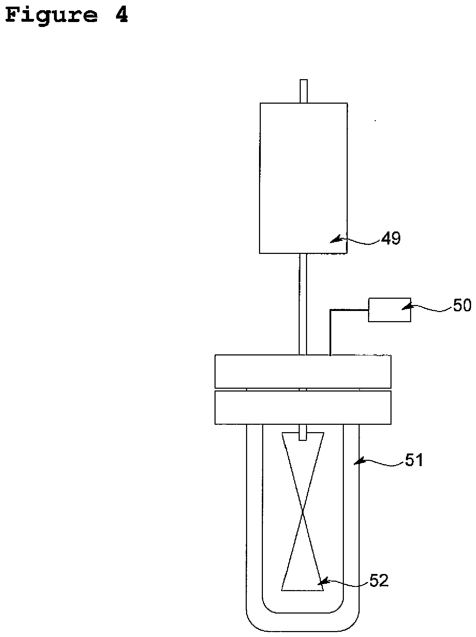

The same amount of CR and bitumen of the Example 1 is prepared and loaded in the same autoclave, an equal amount is instead prepared and loaded in a special autoclave outlined in Figure 4 characterized by a flanged autoclave body 51, a stirring blade 52, a magnetically coupled stirrer 49 and a pressure transducer 50. This device is suitable to carry out the same treatment of the Example 1 providing a mixing of the internal content under pressure condition. Both autoclaves are heated at 300°C for 15 minutes. In the autoclave without stirring the blend result almost untreated, in the autoclave provided with the magnetically coupled stirrer 49, and stirred at 120 rpm, the blend result fully treated and CR smoothly compatible into bitumen. A pressure of 0.9 MPa was recorded by the pressure transducer 50.

### Example 3

100g of untreated CR, with grain size ranging from 0.5mm to 2mm, were heated up to 130°C and then mixed with little amounts of distilled bitumen 180-200 grade heated at the same temperature. The bitumen additions were repeated up to obtain the desired bitumen surface wetting and avoid grains sticking. At the end of the test 43g of bitumen were added resulting in a CR/bitumen percentage ratio of 70/30 for 0.5-2mm grain size. At room temperature the pre-mix composition had the consistence of a dry powder, the bitumen covered each grain homogeneously and had solidified around the same avoiding grains from sticking together. The same experiment was repeated for CR with a grain size ranging from 2mm to 4mm, at the end of the test 25g of distilled bitumen 180-200 grade were added to 100g of CR thus resulting in a CR/bitumen percentage ratio of 80/20 for 2-4mm grain size. Even in this case, at room temperature the pre-mix composition had the consistence of a dry powder, the bitumen covered each grain homogeneously and solidify around the same avoiding grains stick together. The experiment highlight how increasing grain size the grain specific surface decrease and thus the amount of bitumen required to wet and cover the grain result lower.

### Example 4

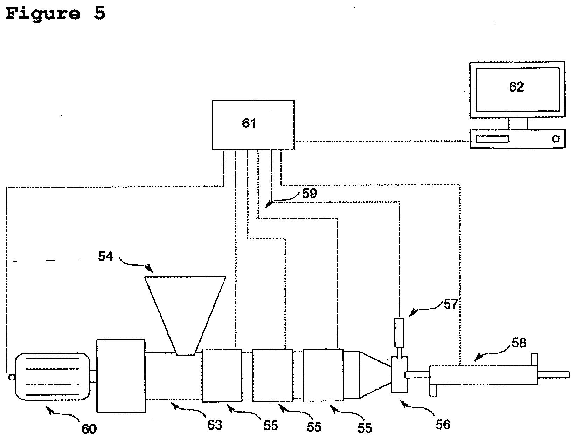

A CR bitumen pre-mix composition was prepared according to the present invention using CR with grain size ranging from 0.5mm to 2mm and distilled bitumen 180-200 penetration grade, with a CR/bitumen percentage ratio of 70/30 by weight. A KRAUSS MAFFEI counter rotating twin screw extruder, model KMD-L-25 was taken, and properly modified in order to reach the temperatures required for carrying out the process object of the present invention. The device used is outlined in Figure 5. The extruder 53 was the conical twin screw extruder KMD-L-25, provided by heaters 55 capable to reach and keep temperature ranging from 250°C to 370°C. The extruder head 56 had a calibrated orifice in order to generate an exact pressure inside the barrel. The extruder head was provided by pressure transducer 57. In the extruder head was also mounted a custom made cooling device 58 that cool down the extruded compound down to the temperature of 180°C in order to simulate the working temperature of an MBP facility, and allowing for bitumen light fractions recondensation. The pre-mix composition was loaded into the extruder loading hopper 54 at room temperature the screw speed was set to 5 rpm, it correspond to 15 min of residence time inside the barrel. The barrel temperature was set at 320°C monitored by the temperature probes 59 and controlled by the PLC 61. The internal barrel pressure was detected by the pressure transducer 57 and controlled by the same PLC 61 by operating on the motor speed. The barrel internal working pressure was 2.5MPa, a safety pressure alarm was at 3.0MPa pressure at which the PLC 61 stops the extruder motor 60. With 15 min of residence time at a temperature of 320°C the CR result completely modified, with a consistence similar to the bitumen and fully compatible with the MBP.

### Example 5 Comparative Example

300g of bitumen 180-200 grade were added to 700g of CR 0.5-2mm grain size, and then mixed at 300°C in a open reactor, according to the method described in WO1994014896. No mixing was possible due to prompt clogging of the blend, and CR sintering by surface devulcanization. Fumes emissions also indicates bitumen light fractions were leaving the mixture. The same amount of a pre-mix composition is prepared according to the present invention as described for Example 4 and then treated into a twin screw extruder at a temperature of 320°C with a residence time inside the barrel of 15 minutes. The resulting product was an homogeneous and smooth Modified CR fully compatible in MBPs.

### Example 6 Comparative Example

The physical and mechanical properties of a classical MBP are compared with the same product obtained using the Modified CR. A Modified CR was prepared as described in Example 4 and using a CR/Bitumen ratio of 70/30. Percentages are by weight.

### Compound A.

A bitumen/filler compound was prepared mixing 63% of 180-200 Bitumen grade with 37% of Calcium Carbonate filler commonly used in MBPs production.

### Compound B.

A similar bitumen/filler compound was prepared using the above cited Modified 70/30 CR to replace a portion of the bitumen, thus resulting in the following formulation: 18% Bitumen, 45% Modified CR, 37% Calcium Carbonate by weight. Because the Modified CR contains 30% of Bitumen and 70% of CR, the above formulation by weight results in 31.5% Bitumen, 31.5% CR, 37% Calcium Carbonate. In this way the total amount of bitumen has been substituted with the 50% by weight of CR.

To both compound A and compound B 2.5% of Styrene Butadiene Styrene (SBS) elastomer, SBS 6306, provided by Versalis S.p.A. was added. The addition of the SBS 6306 was performed by 5 repeated additions of 0.5% per each, and at each addition physical and mechanical parameters of the two compounds was recorded and compared.

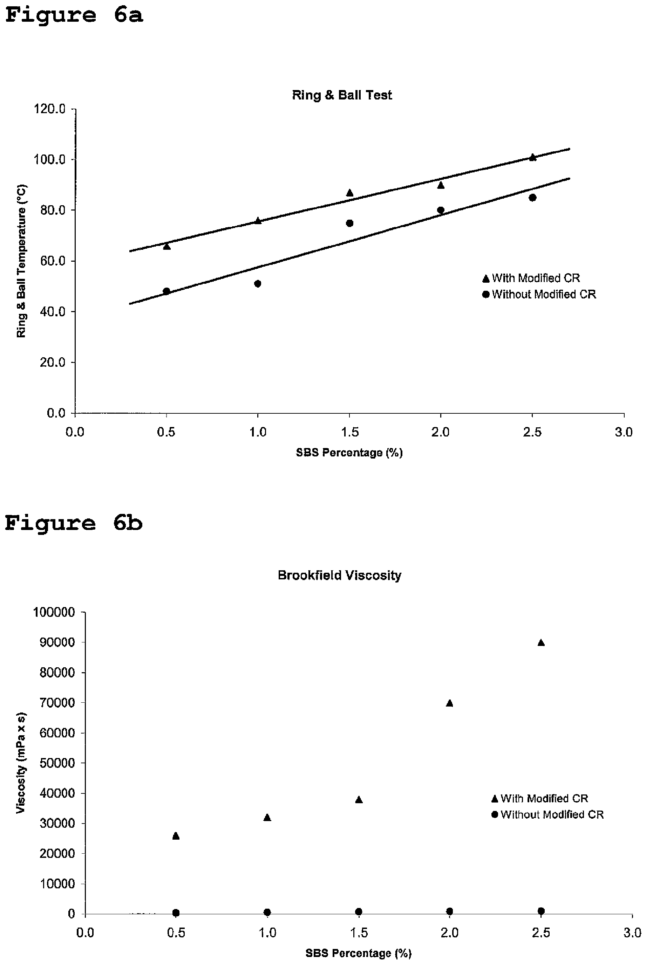

The performed tests were: Ring and Ball test according to the ASTM D36 (Figure 6a), and the viscosity measurement with the Brookfield type viscosimeter according to ASTM D2196 (Figure 6b). Figure 6 reports the charts where is shown how the mechanical and physical performances are higher for the compound obtained with the use of the Modified CR then for the classical MBP compound. This example demonstrates the effectiveness of the Modified CR both as bitumen substitute, saving the 50% of the bitumen usage, and as modifier, increasing the physical and mechanical performances.

### Example 7

A modified bituminous compound was prepared according to the present invention as described in the Example 6 for the Compound B using 1.5% of SBS 6306. A sample of MBP was prepared laying the compound upon a reinforced polyester spunbond typically used for waterproofing membrane production. A specimen was prepared according to the EN 11925-2 and the reaction to fire test was performed according to the same code. A further specimen was prepared according to the ENV 1187 code and tested to external fire exposure according to the same code. Based on the results of the above mentioned tests the product can be classified as Class E passing product and Broof (t2) passing product according to the EN 13501.

### Example 8

A modified bituminous compound was prepared according to the present invention as described in the Example 6 for the Compound B using 1.5% of SBS 6306. A sample of MBP was prepared laying the compound upon a reinforced polyester spunbond typically used for waterproofing membrane production. The sample was prepared according to EN 13416 and artificial ageing by long term exposure to the combination of UV radiation, elevated temperature and water test was performed according to EN 1297. According to the test results, the product is complying with the requirements of EN 1297 for UV resistant flexible sheets for waterproofing.

## Claims

1. A process of producing a modified rubber by treating particles of cross-linked rubber to provide a reduction of the degree of cross-linking of said rubber, comprising the steps of:
i) mixing said particles with bitumen, wherein the amount of bitumen by weight is from 5% to less than 50% by weight of the total amount by weight of rubber particles and
the process being **characterised in** further comprising the following steps:
ii) heating said mixture at a temperature in the range from 210°C to 370°C;
iii) mixing the mixture;
wherein at least the steps ii) and iii) are carried out in a pressurized reactor which is an extruder.

2. A process according to claim 1, wherein the temperature of the mixture in step ii) is in the range of from 260°c to 350°C, more preferably 300 to 340°C.

3. A process according to claim 1 or 2 wherein the amount of bitumen is less
than 40% by weight of the amount of bitumen and rubber particles and most preferably is in the range of 10% to 30% by weight of the amount of bitumen and rubber particles.

4. A process according to any previous claim, wherein said bitumen contains less than 5% by weight of oils, preferably less than 3% by weight of oils.

5. A process according to any previous claim, wherein the pressure in said container is at least equal to the pressure of the saturated vapor of the reaction mixture.

6. A process according to any previous claim, further comprising the step of adding water and/or other additives.

7. A process according to any previous claim, wherein said rubber particles are crumb rubber (CR) obtainable from tyres, and wherein said crumb rubber is treated in said extruder for a time in the range of 3 to 30 minutes, preferably 8 to 20 minutes.

8. A process according to any previous claim, wherein said rubber particles are mixed with bitumen before feeding them to said reactor.

9. A process according to any previous claim where an emulsion of water and bitumen is used instead of bitumen only.

10. A process of preparing a modified bitumen product, comprising the steps of preparing a modified rubber according to any previous claim 1 to 9 and the step of mixing said modified rubber with an additional amount of bitumen.

11. The use of an extruder as a reactor in a plant for the production of a modified rubber according the process of claims 1 to 9, said plant comprising a storage means for rubber particles (3;14;25), a storage means for bitumen (1;12;24) means (31,33) to feed said rubber particles to said extruder, means (40,41) to feed bitumen into said extruder, and optionally means (42,43) to feed water and further additives to said extruder.

## Patentansprüche

1. Verfahren zur Herstellung eines modifizierten Kautschuks durch Behandeln von Teilchen aus vernetztem Kautschuk, um eine Verringerung des Vernetzungsgrades des Kautschuks bereitzustellen, umfassend die Schritte:
i. Mischen der Teilchen mit Bitumen, wobei die Gewichtsmenge an Bitumen von 5 Gew.-% bis weniger als 50 Gew.-% der Gesamtgewichtsmenge der Kautschukpartikel beträgt, und wobei das Verfahren **dadurch gekennzeichnet ist, dass** es weiterhin die folgenden Schritte umfasst:
ii. Erhitzen der Mischung bei einer Temperatur im Bereich von 210 °C bis 370 °C;
iii. Mischen der Mischung;
wobei mindestens die Schritte ii. und iii. in einem Druckreaktor durchgeführt werden, welcher ein Extruder ist.

2. Verfahren gemäß Anspruch 1, wobei die Temperatur der Mischung in Schritt ii. im Bereich von 260 °C bis 350 °C liegt, bevorzugter bei 300 °C bis 340 °C.

3. Verfahren gemäß Anspruch 1 oder 2, wobei die Menge an Bitumen bei weniger als 40 Gew.-% der Menge an Bitumen und Kautschukpartikeln liegt, und am meisten bevorzugt im Bereich von 10 Gew.-% bis 30 Gew.-% der Menge an Bitumen und Kautschukpartikeln liegt.

4. Verfahren gemäß einem der vorhergehenden Ansprüche, wobei das Bitumen weniger als 5 Gew.-% Öle, vorzugsweise weniger als 3 Gew.-% Öle enthält.

5. Verfahren gemäß einem der vorhergehenden Ansprüche, bei dem der Druck im Behälter mindestens gleich dem Druck des gesättigten Dampfes des Reaktionsgemisches ist.

6. Verfahren gemäß einem der vorhergehenden Ansprüche, weiterhin umfassend den Schritt der Zugabe von Wasser und/oder von anderen Additiven.

7. Verfahren gemäß einem der vorhergehenden Ansprüche, wobei die Kautschukpartikel aus Gummigranulat (CR) bestehen, welches aus Reifen herstellbar ist, und wobei das Gummigranulat im Extruder für eine Zeitdauer im Bereich von 3 bis 30 Minuten, vorzugsweise im Bereich von 8 bis 20 Minuten, behandelt wird.

8. Verfahren gemäß einem der vorhergehenden Ansprüche, bei dem die Kautschukpartikel mit Bitumen gemischt werden, bevor sie dem Reaktor zugeführt werden.

9. Verfahren gemäß einem der vorhergehenden Ansprüche, bei dem eine Emulsion aus Wasser und Bitumen, anstelle von lediglich Bitumen verwendet wird.

10. Verfahren zur Herstellung eines modifizierten Bitumenprodukts, umfassend die Schritte zur Herstellung eines modifizierten Kautschuks gemäß einem der vorhergehenden Ansprüche 1 bis 9 und den Schritt des Mischens des modifizierten Kautschuks mit einer zusätzlichen Menge Bitumen.

11. Verwendung eines Extruders als Reaktor in einer Anlage zur Herstellung eines modifizierten Kautschuks gemäß dem Verfahren der Ansprüche 1 bis 9, wobei die Anlage eine Speichereinrichtung für Kautschukpartikel (3; 14; 25), eine Speichereinrichtung für Bitumen (1; 12; 24), Mittel (31, 33) zum Zuführen der Kautschukpartikel zum Extruder, Mittel (40, 41) zum Zuführen von Bitumen in den Extruder, und wahlweise Mittel (42, 43) zum Zuführen von Wasser und weiteren Additiven zum Extruder.

## Revendications

1. Procédé de production d'un caoutchouc modifié par traitement de particules de caoutchouc réticulé pour fournir une réduction du degré de réticulation dudit caoutchouc, comprenant les étapes consistant à :
i) mélanger lesdites particules avec du bitume, dans lequel la quantité de bitume en poids est de 5 % à moins de 50 % en poids de la quantité totale en poids de particules de caoutchouc et le procédé étant **caractérisé en ce qu'**il comprend en outre les étapes suivantes :
ii) chauffage dudit mélange à une température dans la plage de 210 °C à 370 °C ;
iii) malaxage du mélange ;
dans lequel au moins les étapes ii) et iii) sont effectuées dans un réacteur sous pression qui est une extrudeuse.

2. Procédé selon la revendication 1, dans lequel la température du mélange à l'étape ii) se situe dans la plage de 260 °C à 350 °C, mieux encore de 300 à 340 °C.

3. Procédé selon la revendication 1 ou 2, dans lequel la quantité de bitume est inférieure à 40 % en poids de la quantité de bitume et de particules de caoutchouc et, mieux encore, se situe dans la plage de 10 % à 30 % en poids de la quantité de bitume et de particules de caoutchouc.

4. Procédé selon l'une quelconque des revendications précédentes, dans lequel ledit bitume contient moins de 5 % en poids d'huiles, de préférence moins de 3 % en poids d'huiles.

5. Procédé selon l'une quelconque des revendications précédentes, dans lequel la pression dans ledit conteneur est au moins égale à la pression de la vapeur saturée du mélange réactionnel.

6. Procédé selon l'une quelconque des revendications précédentes, comprenant en outre l'étape d'addition d'eau et/ou d'autres additifs.

7. Procédé selon l'une quelconque des revendications précédentes, dans lequel lesdites particules de caoutchouc sont du caoutchouc granulaire (CR) pouvant être obtenu à partir de pneumatiques, et dans lequel ledit caoutchouc granulaire est traité dans ladite extrudeuse pendant un laps de temps dans la plage à 3 à 30 minutes, de préférence de 8 à 20 minutes.

8. Procédé selon l'une quelconque des revendications précédentes, dans lequel ledit caoutchouc granulaire est mélangé à du bitume avant de l'acheminer audit réacteur.

9. Procédé selon l'une quelconque des revendications précédentes, dans lequel une émulsion d'eau et de bitume est utilisée au lieu de bitume uniquement.

10. Procédé de préparation d'un produit à base de bitume modifié, comprenant les étapes de préparation d'un caoutchouc modifié selon l'une quelconque des revendications précédentes 1 à 9 et l'étape de malaxage dudit caoutchouc modifié avec une quantité supplémentaire de bitume.

11. Utilisation d'une extrudeuse comme réacteur dans une usine de production d'un caoutchouc modifié selon le procédé des revendications 1 à 9, ladite usine comprenant un moyen de stockage pour des particules de caoutchouc (3 ; 14 ; 25), un moyen de stockage pour du bitume (1 ; 12; 24), un moyen (31, 33) pour acheminer lesdites particules de caoutchouc à ladite extrudeuse, un moyen (40, 41) pour acheminer le bitume dans ladite extrudeuse, et éventuellement un moyen (42, 43) pour acheminer de l'eau et d'autres additifs à ladite extrudeuse.
